(19) **Europäisches Patentamt / European Patent Office / Office européen des brevets**

(11) **EP 1 890 804 B1**

(12) **EUROPÄISCHE PATENTSCHRIFT**

(45) Veröffentlichungstag und Bekanntmachung des Hinweises auf die Patenterteilung:
**06.10.2010 Patentblatt 2010/40**

(51) Int Cl.:
**B01J 20/12** *(2006.01)*    **A23K 1/175** *(2006.01)*

(21) Anmeldenummer: **06753531.0**

(22) Anmeldetag: **09.05.2006**

(86) Internationale Anmeldenummer:
**PCT/EP2006/004333**

(87) Internationale Veröffentlichungsnummer:
**WO 2006/119967 (16.11.2006 Gazette 2006/46)**

(54) **VERWENDUNG VON STEVENSIT ZUR MYKOTOXINADSORPTION**

USE OF STEVENSITE FOR MYCOTOXIN ADSORPTION

UTILISATION DE STEVENSITE POUR L'ADSORPTION DE MYCOTOXINES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.05.2005 DE 102005021578**

(43) Veröffentlichungstag der Anmeldung:
**27.02.2008 Patentblatt 2008/09**

(73) Patentinhaber: **SÜD-CHEMIE AG
80333 München (DE)**

(72) Erfinder:
• **SOHLING, Ulrich
85356 Freising (DE)**
• **HAIMERL, Agnes
84098 Hohenthann (DE)**

(74) Vertreter: **Stolmár, Matthias
Stolmár Scheele & Partner
Patentanwälte
Blumenstrasse 17
80331 München (DE)**

(56) Entgegenhaltungen:
EP-A- 0 721 741    EP-A- 1 464 232
WO-A-00/41806    WO-A-02/40150
WO-A-91/13555    DE-A1- 3 803 055
DE-A1- 10 056 634    US-A- 5 149 549
US-A1- 2005 029 194

• URENA-AMATE M D ET AL: "Effects of ionic strength and temperature on adsorption of atrazine by a heat treated kerolite" CHEMOSPHERE, PERGAMON PRESS, OXFORD, GB, Bd. 59, Nr. 1, März 2005 (2005-03), Seiten 69-74, XP004736167 ISSN: 0045-6535
• ANTONIO-JAVIER RAMOS ET AL.: "Prevention of toxic effects of mycotoxins by means of nonnutritive adsorbent compounds" JOURNAL OF FOOD PROTECTION, Bd. 59, Nr. 6, 1996, Seiten 631-641, XP008055723 USDES MOINES, IO in der Anmeldung erwähnt
• DATABASE WPI Section Ch, Week 198942 Derwent Publications Ltd., London, GB; Class B07, AN 1989-304165 XP002025796 -& JP 01 224041 A (MIZUSAWA CHEMICAL IND KK) 7. September 1989 (1989-09-07)
• GONZALEZ-PRADAS E ET AL: "REMOVAL OF CHLORIDAZON FROM WATER BY KEROLITE/ STEVENSITE AND BENTONITE: A COMPARATIVE STUDY" JOURNAL OF CHEMICAL TECHNOLOGY AND BIOTECHNOLOGY, WILEY & SONS, CHICHESTER, GB, Bd. 75, Nr. 12, Januar 2000 (2000-01), Seiten 1135-1140, XP001060159 ISSN: 0268-2575
• DATABASE WPI Section Ch, Week 199805 Derwent Publications Ltd., London, GB; Class B04, AN 1998-050052 XP002394080 & RU 2 077 320 C1 (KAZAN VETERINARY MED ACAD) 20. April 1997 (1997-04-20)
• KHOURY H N ET AL: "ORIGIN OF MAGNESIUM CLAYS FROM THE AMARGOSA DESERT, NEVADA" CLAYS AND CLAY MINERALS, CLAY MINERALS SOCIETY, US, Bd. 30, Nr. 5, Oktober 1982 (1982-10), Seiten 327-336, XP009043696 ISSN: 0009-8604

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung von Stevensit bzw. stevensithaltigen Komponenten zur Adsorption von Toxinen, insbesondere Mykotoxinen, ein Verfahren zur Verbesserung der Verwertbarkeit von Mykotoxin-kontaminierten Nahrungs- bzw. Futtermitteln sowie eine Nahrungs- oder Futtermittelzubereitung, enthaltend ein stevensithaltiges Mykotoxin-Adsorbens.

Unter dem Begriff Mykotoxine wird eine Gruppe von toxischen Substanzen zusammengefasst, die von verschiedenen, natürlich vorkommenden Pilzen gebildet werden. Derzeit sind etwa 300 bis 400 Mykotoxine bekannt. Als natürlicher Lebensraum für diese Pilze werden allgemein Getreidearten und Körnerfrüchte angesehen. Während sich einige Pilzarten bereits auf dem noch abreifenden Getreidekorn in der Ähre entwickeln, befallen andere Arten vornehmlich lagernde Getreide-Futtermittelvorräte, wenn eine gewisse Mindestfeuchte und Umgebungstemperatur gegeben ist.

Alle sog. Mykotoxine haben eine gesundheitsschädliche Wirkung primär auf mit kontaminierten Getreidearten gefütterte landwirtschaftliche Nutztiere, jedoch sekundär über die Nahrungskette auch auf den Menschen.

Weltweit sind mit unterschiedlicher regionaler Ausprägung vor allen Dingen folgende Mykotoxine von Bedeutung in der tierischen, aber auch menschlichen Ernährung: Aflatoxin, Ochratoxin, Fumonisin, Zearalenon, Deoxynivalenol, T-2 Toxin und Ergotamin. Zur näheren Diskussion dieser sowie weiterer Mykotoxine kann auf die WO 00/41806 der gleichen Anmelderin sowie die dort genannten Fundstellen verwiesen werden.

Durch die Entwicklung empfindlicherer Analysenmethoden konnten in verschiedenen Futtermitteln mehrere unterschiedliche Toxine ermittelt werden, die als Verursacher von gesundheitlichen Problemen bei Mensch und Tier erkannt wurden. Eine Reihe von Studien konnte zeigen, dass mehrere Toxine gleichzeitig z.B. in Futtermitteln vorkommen können. Dieses gleichzeitige Auftreten kann die Toxizität der Mykotoxine erheblich beeinflussen. Neben akuten Schäden an Nutztieren, die mykotoxinkontaminierte Futtermittel erhalten, werden in der Literatur auch gesundheitliche Schäden an Menschen diskutiert, welche durch dauerhafte Aufnahme von schwach mit Mykotoxinen kontaminierten Nahrungsmitteln entstehen.

In einer neueren Untersuchung verdächtiger Futterproben wurden Aflatoxin, Deoxynivalenol oder Fumonisin in über 70% der untersuchten Proben gefunden (vgl. "Understanding and coping with effects of mycotoxins in life dog feed and forage", North Carolina Cooperative Extension Service, North Carolina State Univ.).

In vielen Fällen sind die ökonomischen Auswirkungen in Bezug auf eine verringerte Produktivität der Tiere, das verstärkte Auftreten von Krankheiten durch eine Immunsuppression, die Schädigung lebenswichtiger Organe, und die Beeinträchtigung der Reproduktivität größer als die durch den Tod von Tieren durch Mykotoxinvergiftung verursachten Auswirkungen.

Die Gruppe der Aflatoxine wird aufgrund ihrer spezifischen Molekularstruktur mit hoher Spezifität an einige mineralische Adsorbentien wie z.B. Zeolith, Bentonit, Aluminiumsilicat und andere fixiert (vgl. A.-J. Ramos, J. Fink-Gremmels, E. Hernandez, "Prevention of Toxic Effects of Mycotoxins by Means of Nonnutritive Adsorbent Compounds", J. of Food Protection, Bd. 59(6), 1996, S. 631-641).

So beschreibt und beansprucht die US 5,149,549 die Verwendung von Bentonit als Mykotoxin- insbesondere jedoch Aflatoxinadsorbens zur Verwendung in Tierfutter.

Jedoch erfolgt eine Bindung der anderen oben aufgeführten wichtigen Mykotoxine an natürliche, mineralische Adsorbentien mit nur sehr geringer Effektivität. Um die Adsorptionskapazität mineralischer Adsorbentien für diese Nicht-Aflatoxine zu verbessern, wurden verschiedene Arten von Oberflächenmodifikationen an natürlichen Schichtsilicaten vorgeschlagen.

S.L. Lemke, P.G. Grant und T.D. Phillips beschreiben in "Adsorption of Zearalenone by Organophilic Montmorillonite Clay", J. Agric. Food Chem. (1998), S. 3789-3796 einen organisch modifizierten (organophilen) Montmorillonit-Ton, der in der Lage ist, Zearalenon zu adsorbieren. Die Verwendung organisch modifizierter Schichtsilicate oder Gemische aus organisch modifizierten und nicht modifizierten Schichtsilicaten ist auch aus der EP 1 150 767 B1 der gleichen Anmelderin bekannt.

Den organisch modifizierten (organophilen) Adsorbentien ist jedoch gemein, dass sie nur eine Auswahl bestimmter Toxine mit hoher Effektivität binden, während andere Toxine wie z.B. Fumonisin auch durch eine organophile Oberflächenmodifikation nicht effektiv gebunden werden können. Zudem ist die organophile Modifikation der Schichtsilicate aufwendig und somit kostenintensiv.

Die Verwendung von säureaktivierten Schichtsilicaten ist aus der EP 1 333 919 B1 der gleichen Anmelderin bekannt. Durch diese Säureaktivierung steigt zwar die Adsorptionsleistung für Toxine, die besonders an saure Oberflächen gebunden werden können (wie z.B. Fumonisin), die Fähigkeit andere Toxine zu binden, verringert sich jedoch. Die Säureaktivierung, wie auch andere Modifikationen der Schichtsilicate, ist außerdem ein aufwendiger und daher teurer Prozess. Die Kosten des Mykotoxin-Adsorbens stellen insbesondere bei der Verwendung in der Futtermittelindustrie ein wesentliches Argument dar.

Aufgabe der Erfindung ist es daher, ein Mykotoxin-Adsorbens bereitzustellen, das die Nachteile des Standes der Technik vermeidet und eine effiziente Adsorption eines möglichst breiten Spektrums verschiedener Mykotoxine, insbesondere auch Nicht-Aflatoxine ermöglicht, ohne gleichzeitig die Bindekapazität für andere Toxine zu verringern, und das insbesondere kostengünstig hergestellt werden kann.

Eine weitere Aufgabe bestand darin, ein besonders effizientes Mykotoxin-Adsorbens für Nicht-Aflatoxine (d.h. andere Mykotoxine außer Aflatoxine), insbesondere T-2 Toxine bereitzustellen.

Diese Aufgabe wird durch die Verwendung eines Mykotoxin-Adsorbens gelöst, das Stevensit oder mindestens eine stevensithaltige Komponente enthält. So wurde überraschend gefunden, dass ein besonders gutes und kostengünstiges Mykotoxin-Adsorbens für ein breites Spektrum an unterschiedlichen Mykotoxinen erhalten wird, wenn eine Zusammensetzung mit einem Sorptionsmittel, enthaltend Stevensit oder mindestens eine stevensithaltige Komponente, eingesetzt wird. Weiterhin wurde gefunden, dass eine solche Zusammensetzung bzw. ein solches Adsorptionsmittel (Mykotoxin-Adsorbens), enthaltend Stevensit, besonders effizient Nicht-Aflatoxine wie T-2 Toxin binden kann.

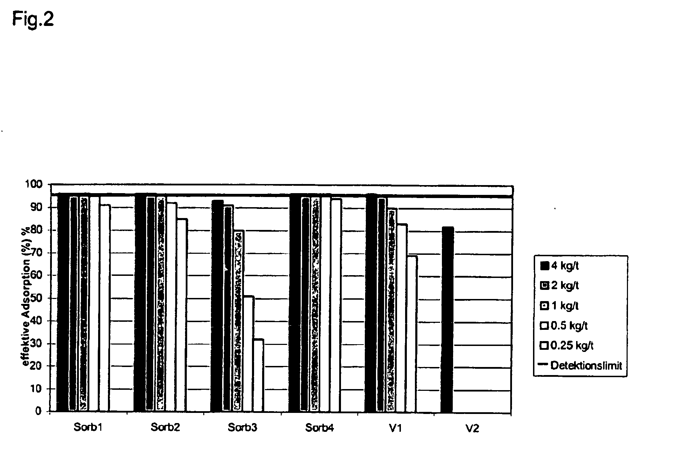

Was unter Stevensit zu verstehen ist, ist dem Fachmann geläufig. Eine nähere Charakterisierung von Stevensit findet sich beispielsweise in J.L. Martin de Vidales et al., Clay Minerals (1991) 26, S. 329-342, und in G.B. Brindley et al., Mineralogical Magazine, 1977, Vol. 41, S. 443-452, auf die ausdrücklich verwiesen werden kann. Die Bestimmung von Stevensit kann wie dort beschrieben durchgeführt werden. Charakteristisch ist der Diffraktionspeak bei Gitterabstand (Basalabstand) 10 Å, dessen Lage bei verschiedenen Feuchtigkeiten eine deutliche Verschiebung zeigt. Charkteristisch ist auch der Abstand nahe 17 Å bei Behandlung mit Ethylenglycol. Hier wird ausdrücklich auf die bei G.B. Brindley et al. (a.a.O.) in Fig. 2 angegebene Pulver-Röntgendiffraktogramme für Stevensit und die dazugehörigen Teile des Textes verwiesen. Erfindungsgemäß ändert sich daher bei den eingesetzten Stevensiten in dem Mykotoxin-Adsorbens bzw. in der Stevensithaltigen Komponente bei unterschiedlichen Feuchtigkeiten oder einer Behandlung mit Ethylenglycol gemäß Fig. 2 der Literaturstelle Brindley et al. (a.a.O.) die Lage des Diffraktionspeaks beim Gitterabstand von etwa 10 Å charakteristisch. Dadurch unterscheidet sich der eingesetzte Stevensit beispielsweise auch von reinem Kerolith.

Es wurde auch überraschend gefunden, dass Effizienz und Geschwindigkeit der Bindung von sowohl Aflatoxinen als auch Nicht-Aflatoxinen wie Ochratoxin, T-2 Toxin, Zearalenon oder Fumonisin durch die erfindungsgemäßen stevensithaltigen Zusammensetzungen deutlich besser ist als diejenige anderer nicht-modifizierter Minerale bzw. Schichtsilicate. Letztere zeigen oft nur sehr schwache Bindungseffektivität, insbesondere für Nicht-Aflatoxine. Somit wurde unerwartet gefunden, dass sich die Wirkung von Stevensit als Mykotoxin-Adsorbens, insbesondere für Nicht-Aflatoxine, bereits ergibt, wenn keine Modifikation, insbesondere keine organische Modifikation (Organophilierung) z.B mit organischen Oniumverbindungen erfolgt. Bevorzugt werden daher erfindungsgemäß der Stevensit bzw. die mindestens eine stevensithaltige Komponente in dem Sorptionsmittel bzw. der erfindungsgemäßen Zusammensetzung in nicht organisch modifizierter Form eingesetzt. Nach einer bevorzugten Ausführungsform erfolgt auch keine Aktivierung, insbesondere keine Säureaktivierung des Stevensits bzw. der stevensithaltigen Komponente, da dies zur Erzielung vorteilhafter Mykotoxinadsorptionsleistungen überraschend nicht erforderlich ist. Weiterhin wird nach einer erfindungsgemäßen Ausführungsform bevorzugt, dass auch keine oberflächenmodifizierenden Agentien oder Kontaktierungsmittel (sequestering agents) wie z. B. aus der WO 91/13555 bekannt, zur Modifikation des eingesetzten Stevensits bzw. der stevensithaltigen Komponente(n) eingesetzt werden. Diese können jedoch grundsätzlich nach einer anderen erfindungsgemäßen Ausführungsform in der Zusammensetzung enthalten sein.

Der Ausdruck "Stevensit" soll hier einfachheitshalber auch stevensithaltige Komponenten umfassen. Der Begriff "stevensithaltige Komponente" soll zum Ausdruck bringen, dass in der erfindungsgemäßen Zusammensetzung auch Komponenten eingesetzt werden können, die neben Stevensit noch weitere Bestandteile enthalten. Beispielsweise enthalten viele kommerziell erhältliche Stevensit-Produkte neben Stevensit noch unterschiedliche Mengen an Begleitmineralien. Zudem sind auch Abmischungen von Stevensit mit anderen Bestandteilen, wie beispielsweise anderen mineralischen Bestandteilen, insbesondere Schichtsilicaten, denkbar. Vorzugsweise enthält die stevensithaltige Komponente zumindest 5 Gew.-% Stevensit bzw. Stevensitphase.

Nach einer bevorzugten Ausführungsform besteht die erfindungsgemäße Zusammensetzung bzw. das Mykotoxin-Adsorbens im Wesentlichen oder vollständig aus Stevensit oder mindestens einer stevensithaltigen Komponente.

Nach einer weiteren bevorzugten Ausführungsform enthält die Zusammensetzung mindestens 10 Gew.-%, vorzugsweise mindestens 50 Gew.-%, insbesondere mindestens 75 Gew.-%, besonders bevorzugt mindestens 90 Gew.-%, insbesondere bevorzugt mindestens 95 Gew.-%, Stevensit oder mindestens eine stevensithaltigen Komponente. So wurde überraschend gefunden, dass eine besonders gute Adsorptionseffizienz insbesondere für Nicht-Aflatoxine wie T-2 Toxin, Ochratoxin oder Zearalenon erhalten wird, wenn Stevensit in den erfindungsgemäß verwendeten Materialien bzw. Komponenten mineralogisch die Hauptphase darstellt.

Nach einer anderen bevorzugten erfindungsgemäßen Ausführungsform können auch Materialien oder Mischungen, enthaltend Stevensit bzw. mindestens eine stevensithaltige Komponente einerseits, und Kerolith bzw. mindestens eine kerolithhaltige Komponente andererseits eingesetzt werden. So wurde überradchend gefunden, dass solche Materialien oder Mischungen, die sowohl Stevensit als auch Kerolith enthalten, besonders bei Verwendung in niedrigen Mengen bzw. Konzentrationen bereits eine hervorragende Mykotoxinadsorption ermöglichen. Besonders bevorzugte Materialien enthalten hierbei mindestens 5 Gew-%, insbesondere mindestens 20 Gew-%, weiter bevorzugt mindestens 40 Gew.-% Kerolith bzw. Kerolithphase. Was hierbei unter Kerolith zu verstehen ist, ist dem Fachmann geläufig und muss hier nicht näher erläutert werden. Beispielsweise kann hier auch auf Brindley et al. (a.a.O.) verwiesen werden. Die Bestimmung von Kerolith kann wie dort beschrieben durchgeführt werden. Die chemische Analyse von Kerolith ergibt eine Zusammensetzung nahe $R_3Si_4O_{10}(OH)_2 \cdot H_2O$, wobei R hauptsächlich Mg darstellt und n etwa 0,8 bis 1,2 beträgt. Charakteristisch ist der Diffraktionspeak bei Gitterabstand (Basalabstand) 10 Å, dessen Lage bei verschiedenen Feuchtigkeiten keine Expansion und bis 500°C keine thermische Kontraktion zeigt. Hier wird ausdrücklich auf die bei G.B. Brindley et al. (a.a.O.) in Fig. 2 angegebene Pulver-Röntgendiffraktogramme für Kerolith und die dazugehörigen Teile des Textes verwiesen. Nach einer möglichen erfindungsgemäßen Ausführungsform ist in der erfindungsgemäßen Zusammensetzung der Stevensit bzw. die mindestens eine stevensithaltige Komponente teilweise oder vollständig durch Kerolith oder mindestens eine kerolithhaltige Komponente ersetzt. Die nachstehenden Angaben für Stevensit bzw. eine stevensithaltige Komponente gelten nach dieser Ausführungsform daher entsprechend für Kerolith und eine kerolithhaltige Komponente.

Im Rahmen der vorliegenden Erfindung wurde weiterhin gefunden, dass besonders solche Sorptionsmittel bzw. Mykotoxin-Adsorbentien (allgemein: Materialien) oder Stevensite bzw. stevensithaltige Komponenten geeignet sind, die einen Magnesiumoxidgehalt von mindestens 15 Gew.-%, insbesondere mindestens 17 Gew.-%, weiter bevorzugt mindestens 20 Gew.-%, aufweisen. Entsprechende Materialien, insbesondere Stevensite bzw. stevensithaltige Komponenten sind kommerziell verfügbar. Weiterhin wird bevorzugt, dass der Magnesiumoxidgehalt des verwendeten Materials, insbesondere des Stevensits bzw. der stevensithaltigen Komponente nicht über 40 Gew.-%, insbesondere nicht über 35 Gew.-%, in vielen Fällen weiter bevorzugt nicht über 30 Gew.-%, liegt.

Der Gehalt an Magnesiumoxid ist auch bestimmend für die genaue Ausbildung der Schichtstruktur des Materials. Es wird angenommen, ohne dass die Erfindung auf die Richtigkeit dieser Annahme beschränkt wäre, dass die Schichtstruktur des erfindungsgemäß verwendeten Materials, insbesondere des Stevensits eine besonders günstige Porosimetrie und besonders effiziente Oberflächen zur Adsorption einer Vielzahl unterschiedlicher Mykotoxine bereitstellt.

Dabei wird weiterhin bevorzugt, dass die verwendeten Materialien, insbesondere Stevensite bzw. stevensithaltigen Komponenten eine BET-Oberfläche (gemessen nach DIN 66131, siehe Methodenteil) von mindestens 80 $m^2/g$, insbesondere mindestens 100 $m^2/g$, insbesondere mindestens 110 $m^2/g$, aufweisen. Diese hohen BET-Oberflächen ermöglichen offenbar für einige Mykotoxine eine noch effizientere Adsorption. Es wurde weiterhin gefunden, dass besonders solche Materialien besonders gute Ergebnisse liefern, die eine Kationenaustauschkapazität (CEC, cation exchange capacity) von weniger als 40 meq/100 g, insbesondere weniger als 35 meq/100 g, besonders bevorzugt weniger als 30 meq/100 g, aufweisen. Die CEC kann wie im nachstehenden Methodenteil angegeben bestimmt werden.

Nach einer weiteren bevorzugten Ausführungsform werden solche Materialien bzw. Stevensite bzw. stevensithaltigen Komponenten eingesetzt, deren CEC mindestens 5 meq/100 g, vorzugsweise mindestens 10 meq/100 g, insbesondere mindestens 15 meq/100 g, beträgt.

Wie vorstehend erwähnt, bietet die Schichtstruktur und Zusammensetzung der erfindungsgemäß eingesetzten Materialien besonders gute Voraussetzungen zur Mykotoxin-Adsorption. Es wurde nun auch gefunden, dass Schichtsilicatmaterialien, die in rasterelektronenmikroskopischen Aufnahmen eine faserförmige Struktur aufweisen, wie z.B. reiner Sepiolith, eine deutlich schlechtere Mykotoxin-Adsorption ermöglichen. Nach einer bevorzugten erfindungsgemäßen Ausführungsform enthält die erfindungsgemäße Zusammensetzung bzw. das erfindungsgemäße Mykotoxin-Adsorbens daher weniger als 20 Gew.-% n faserförmigen Schichtsilicaten, insbesondere Sepiolith, vorzugsweise weniger als 10 Gew.-%, insbesondere weniger als 5 Gew.-% und weiter bevorzugt weniger als 1 Gew.-%. Nach einer erfindungsgemäßen Ausführungsform ist kein faserförmiges Schichtsilicat, insbesondere kein Sepiolith, in der erfindungsgemäßen Zusammensetzung bzw. dem erfindungsgemäßen Mykotoxin-Adsorbens enthalten.

Nach einer weiteren erfindungsgemäßen Ausführungsform ist es auch möglich, dass das erfindungsgemäß eingestzte Material, insbesondere der Stevensit bzw. die mindestens eine stevensithaltige Komponente als wirksamer und kostengünstiger Ersatz für eine andere kostenintensivere mykotoxinadsorbierende Komponente in einer Mykotoxinadsorbens-Zusammensetzung verwendet wird, oder um die Adsorption eines bestimmten Toxins bereitzustellen bzw. zu verbessern. So zeigt der Vergleich der Bindekapazität von Stevensit bzw. stevensithaltiger Komponenten mit der von anderen Adsorbentien oder auf dem Markt erhältlichen Mykotoxinadsorbern eine besonders gute Bindung von u.a. T-2 Toxin, welches sonst nur schwer gebunden wird. Eine solche erfindungsgemäße Zusammensetzung kann dann auch einen geringeren Gehalt an den erfindungsgemäß eingesetzten Materialien, insbesondere an Stevensit bzw. mindestens einer stevensithaltigen Komponente aufweisen, beispielsweise im Bereich von 1 bis 50 Gew.-%, bevorzugt 5 bis 30 Gew.-%, insbesondere 5 bis 20 Gew.-%. Der genaue Anteil an den erfindungsgemäß eingesetzten Materialien (Stevensit bzw. mindestens einer stevensithaltigen Komponente) in der erfindungsgemäßen Zusammensetzung wird im Einzelfall von der vorgesehenen Verwendung und den anderen Komponenten der Zusammensetzung abhängen.

Die erfindungsgemäß eingesetzten Materialien, insbesondere der Stevensit bzw. die stevensithaltige(n) Komponente(n) können in beliebiger Form eingesetzt werden. Vorzugsweise werden sie, in Abhängigkeit von der geplanten Form der Zusammensetzung, teilchenförmig eingesetzt. Es sind sowohl Pulver, Granulate als auch Formkörper denkbar. Genauso sind Suspensionen oder Slurries erfasst. In vielen Fällen wird es am praktischsten und kostengünstigsten sein, die kommerziell verfügbaren Korngrößen der Ton(Stevensit)sorten einzusetzen. Jedoch kann die verwendete Korn- bzw. Teilchengröße auch einen Einfluss auf die Adsorptionseffizienz haben.

Nach einer bevorzugten Ausführungsform wird das eingesetzte Material, insbesondere der eingesetzte Stevensit bzw. die stevensithaltige Komponente als Pulver oder Granulat eingesetzt, wobei auch Anwendungen in immobilisierter Form auf einem Träger möglich sind. Nach einer möglichen erfindungsgemäßen Ausführungsform liegt die mittlere Teilchengröße ($D_{50}$) des erfindungsgemäß eingesetzten Materials, insbesondere des eingesetzten Stevensits bzw. der stevensithaltigen Komponente kleiner oder gleich etwa 100 $\mu$m, insbesondere kleiner oder gleich etwa 80 $\mu$m. Der Nasssiebrückstand auf 45 $\mu$m liegt vorzugsweise bei weniger als etwa 50 %, der Trockensiebrückstand auf 45 $\mu$m bei weniger als etwa 60 %. Es sind jedoch auch andere Teilchengrößen möglich.

Nach einer weiteren bevorzugten erfindungsgemäßen Ausführungsform kann, wie vorstehend erwähnt, neben dem erfindungsgemäß eingesetzten Material, insbesondere Stevensit bzw. der mindestens einen stevensithaltigen Komponente in der erfindungsgemäßen Zusammensetzung noch mindestens eine weitere Komponente enthalten sein. Vorzugsweise wird es sich bei den zusätzlichen Komponenten um solche handeln, die je nach der geplanten Verwendung positive Eigenschaften zur Verfügung stellen, ohne die Adsorptionseffizienz des erfindungsgemäß eingesetzten Materials, insbesondere des Stevensits bzw. der mindestens einen stevensithaltigen Komponente in der Zusammensetzung zu beeinträchtigen. Dabei konnte insbesondere eine hervorragende Adsorption für Nicht-Aflatoxine wie T-2 Toxin, Ochratoxin oder Zearalenon festgestellt werden.

Eine Gruppe möglicher zusätzlicher Komponenten umfasst auch weitere Mykotoxinadsorbentien. Dabei kann prinzipiell jedes im Stand der Technik bekannte Mykotoxin-Adsorbens verwendet werden. Als nicht beschränkende Beispiele, die gemäß der vorliegenden Erfindung besonders vorteilhaft eingesetzt werden können, sind hier säureaktivierte Schichtsilicate und organisch modifizierte Schichtsilicate zu nennen. So wurde im Rahmen der vorliegenden Erfindung auch gefunden, dass durch Abmischungen der erfindungsgemäß eingesetzten Materialien, insbesondere von Stevensit bzw. mindestens einer stevensithaltigen Komponente mit organisch modifizierten Schichtsilicaten, wie beispielsweise in der EP 1 150 767 der gleichen Anmelderin beschrieben, oder säureaktivierten Schichtsilicaten, wie beispielsweise in der EP 1 333 919 der gleichen Anmelderin beschrieben, besonders vorteilhafte Zusammensetzungen erhalten werden können, die ein großes Spektrum an Aflatoxin- und Nicht-Aflatoxin Mykotoxinen effizient adsorbieren können. Die diesbezügliche Offenbarung der EP 1 333 919 A1 sowie der EP 1 150 767 A1 zu den dort beschriebenen, säureaktivierte Schichtsilicate bzw. organisch modifizierte Schichtsilicate enthaltenden Mykotoxin-Adsorbentien werden hiermit ausdrücklich durch Bezugnahme in die vorliegende Beschreibung aufgenommen. Die Ausdrücke Adsorption und Absorption werden hierin gleichbedeutend verwendet. Insbesondere interessant sind aufgrund der guten Adsorptionsleistungen und der kostengünstigen Herstellung auch Mischung von Stevensit bzw. mindestens einer Stevensithaltigen Komponente mit nichtmodifizierten oder organisch modifizierten Bentoniten. Dabei dient der Zusatz des Bentonits vor allem dazu, die Bindekapazität für Aflatoxine weiter zu erhöhen.

Soweit in der erfindungsgemäßen Zusammensetzung mindestens ein weiteres Schichtsilicat enthalten ist, kann es nach einer möglichen bevorzugten Ausführungsform ausgewählt sein aus der Smektit-Gruppe, der Serpentin-Kaolin-Gruppe, der Pyrophyllit-Gruppe, aus der Gruppe der Attapulgite/Palygorskite, Vermiculite, Illite, Sepiolithe und/oder der glimmerartigen Schichtsilicate. Zu den Schichtsilicaten der Gruppe der Smektite gehören die trioktaedrischen Smektite, wie Saponit und Hectorit, und die dioktaedrischen Smektite, wie Montmorillonit, Beidellit und Nontronit. Zur Serpentin-Kaolin-Gruppe gehören beispielsweise Chrysotil, Antigorit, Kaolinit und Halloysit. Zur Pyrophyllit-Gruppe gehört der Pyrophyllit. Besonders bevorzugt werden als Schichtsilicate Montmorillonit-Tone wie Smektite, insbesondere Bentonite sowie Attapulgit und Halloysit sowie deren natürlich vorkommende Gemische. Nach einer bevorzugten erfindungsgemäßen Ausführungsform umfassen die anderen Schichtsilicate einen Montmorillonitton, insbesondere einen Bentonit, oder natürliche Gemische aus Attapulgit sowie Halloysit und/oder Talks bzw. Chlorit(e). Bei dem (den) weiteren Schichtsilicat(en) kann es sich um nicht modifizierte, sauer oder alkalisch aktivierte und/oder organisch modifizierte Schichtsilicate handeln.

Soweit mindestens ein säureaktiviertes Schichtsilicat in der erfindungsgemäßen Zusammensetzung enthalten ist, kann nach einer bevorzugten Ausführungsform das Schichtsilicat mit etwa nur 0,5 Gew.-% bis 8 Gew.-%, insbesondere 1 bis 6 Gew.-%, besonders bevorzugt etwa 1,5 bis 4 Gew.-% Säure aktiviert werden. Die Säureeinwirkungszeit ist von der verwendeten Säuremenge sowie der Aktivierungstemperatur abhängig, wobei in der Regel jedoch Aktivierungszeiten von weniger als zwei Stunden, insbesondere von weniger als 1 Stunde, ausreichend sind. Beispielsweise kann eine Aktivierungstemperatur von unter 80°C eingehalten werden. Alle Arten der Säureaktivierung (z.B. trockenes Vermischen mit fester Säure, Besprühen oder Kochen mit einer Säurelösung) sind möglich. Als Schichtsilicat kann erfindungsgemäß jedes mit einer Säure aktivierbare Phyllosilicat (siehe auch oben) verwendet werden.

Weitere mögliche Komponenten der erfindungsgemäßen Zusammensetzung betreffen z.B. organische oder anorganische Komponenten, die gemäß dem Stand der Technik in der Lage sind, die Verwertung eines kontaminierten Futters zu verbessern, die Gesundheit der Tiere, insbesondere deren Immunsystem, zu stabilisieren oder die Stoffwechselprozesse in positiver Weise zu beeinflussen. Dies können u.a. sein: Vitamine, Enzyme, pflanzliche Bestandteile oder Extrakte sowie andere unter der Bezeichnung Probiotika bekannte Stoffe.

Nach einer besonders bevorzugten erfindungsgemäßen Ausführungsform werden neben oder in der erfindungsgemäßen Zusammensetzung weitere Mykotoxin-Adsorbentien, insbesondere ein nicht mit Säure aktiviertes Schichtsilicat wie ein Calcium-, oder Natriumbentonit und/oder ein organophiles Schichtsilicat, insbesondere ein organophiler Bentonit, und/oder ein mit Säure aktiviertes Schichtsilicat, insbesondere ein säureaktivierter Bentonit, Attapulgit oder Hektorit, verwendet. Der Ausdruck "neben der erfindungsgemäßen Zusammensetzung" soll dabei zum Ausdruck bringen, dass die Verwendung der erfindungsgemäßen Zusammensetzung auch gleichzeitig oder sequentiell mit anderen Mykotoxin-Adsorbentien oder anderen Zusammensetzungen erfolgen kann. Ein Beispiel ist hier die Behandlung von Tierfutter bzw. die Verfütterung an Tiere. In vielen Fällen wird es sinnvoll oder möglich sein, die einzelnen Mykotoxin-Adsorbentien oder Komponenten in der erfindungsgemäßen Zusammensetzung zu kombinieren, insbesondere durch Zusammengeben oder Vermischen.

Nach einer möglichen erfindungsgemäßen Ausführungsform liegen somit die weiteren verwendeten Mykotoxin-Adsorbentien bzw. Komponenten wie hierin beschrieben als Gemisch mit bzw. in der Zusammensetzung vor. Entsprechend erfolgt die Herstellung der erfindungsgemäßen Zusammensetzung, soweit mehr als eine Komponente enthalten ist, z.B. durch herkömmliches Vermischen.

Nach einer besonders bevorzugten erfindungsgemäßen Ausführungsform eignen sich die erfindungsgemäßen Zusammensetzungen insbesondere zur Adsorption von Mykotoxinen aus der Gruppe der Aflatoxine sowie der Nicht-Aflatoxine wie Ochratoxin, Fumonisin, Zearalenon, Deoxynivalenol T-2 Toxin und Ergot-Toxin. Ein erfindungsgemäßer Aspekt betrifft also die Verwendung einer erfindungsgemäßen Zusammensetzung wie hierin definiert zur Adsorption mindestens eines der vorstehenden Mykotoxine, insbesondere von T-2 Toxin, Ochratoxin, Fumonisin, Zearalenon und/oder Deoxynivalenol. Besonders vorteilhaft ist die gleichzeitige effektive und kostengünstige Adsorption von Aflatoxinen und Nicht-Aflatoxinen, insbesondere Fumonisinen und Toxinen aus der Gruppe der Trichothecene (Deoxynivalenol, T-2 Toxin und HT-2 Toxin). Die erfindungsgemäße Zusammensetzung wird vorzugsweise bei solchen zu behandelnden Stoffen (z.B. Nahrungs- oder Futtermitteln) eingesetzt, die mindestens eines oder mehrere der vorstehenden Mykotoxine, insbesondere ausgewählt aus der Gruppe der Aflatoxine, T-2 Toxin, Citrinin, Cyclopiazonsäure, Ochratoxin, Patulin, Vertreter der Trichothecene wie Nivalenol, Deoxynivalenol, HT-2 Toxin, Fumonisine, Zearalenon und Ergotalkaloide enthalten.

Nach einem weiteren Aspekt umfasst die Mykotoxin-Kontamination zwei oder mehrere Mykotoxine, insbesondere neben Aflatoxin(en) noch weitere Toxine wie Ochratoxin, Fumonisin, Zearalenon, Deoxynivalenol und/oder T-2- bzw. T-2-ähnliche Toxine.

Nach einer bevorzugten Ausführungsform werden, bezogen auf die Menge des Mykotoxin-kontaminierten Materials, mindestens 0,01 Gew.-%, vorzugsweise mindestens 0,05 Gew.-%, insbesondere mindestens 0,1 Gew.-%, der erfindungsgemäßen Zusammensetzung bzw. der erfindungsgemäß eingesetzten Materialien verwendet.

Nach einem weiteren Aspekt betrifft die Erfindung eine Futterzubereitung, enthaltend ein mykotoxin-kontaminiertes Tierfutter und eine erfindungsgemäße Zusammensetzung wie hierin beschrieben.

Schließlich betrifft die Erfindung nach einem weiteren Aspekt ein Verfahren zur besseren Verwertbarkeit bzw. Verbesserung der Verträglichkeit für Tier und Mensch eines Mykotoxinkontaminerten Futter- bzw. Nahrungsmittels. Dabei wird eine erfindungsgemäße Zusammensetzung wie vorstehend beschrieben vor oder gleichzeitig mit der Aufnahme durch ein Tier zu dem Futtermittel gegeben. Nach diesem erfindungsgemäßen Verfahren kann eine verbesserte Gewichtszunahme beim Verfüttern des erfindungsgemäßen Adsorbens mit dem mykotoxin-kontaminierten Futter bzw. Nahrungsmittel erzielt werden.

Die Bestimmung der hierin genannten Größen erfolgte, soweit nicht anders angegeben, gemäß der nachstehend angegebenen Methoden.

**1. Bestimmung der spezifischen Oberfläche (BET)**

Die Messungen wurden mit einem Micromeritics "Gemini 2360"-Gerät gemäß DIN 66131 durchgeführt.

**2. Bestimmung der Teilchengrößenverteilung (nach Malvern)**

Die Teilchengrößenverteilung wurde nach Malvern bestimmt. Dabei handelt es sich um ein gängiges Verfahren. Es wurde ein Mastersizer der Firma Malvern Instruments Ltd, UK, entsprechend der Angaben des Herstellers eingesetzt. Die Messungen wurden mit der vorgesehenen Probenkammer ("dry powder feeder") in Luft durchgeführt und die auf das Probenvolumen bezogenen Werte (auch die durchschnittliche Teilchengröße $D_{50}$) ermittelt.

**3. Bestimmung der Kationenaustauschkapazität (CEC-Analyse) und der Kationenanteile**

Prinzip: Der Ton wird mit einem großen Überschuss an wässriger $NH_4Cl$-Lösung behandelt, ausgewaschen und die auf dem Ton verbliebene $NH_4^+$-Menge mittels Elementaranalyse bestimmt.

$$Me^+(Ton)^- + NH_4^+ - NH_4^+(Ton)^- + Me^+$$

$$(Me^+ = H^+, K^+, Na^+, 1/2\ Ca^{2+}, 1/2\ Mg^{2+}....)$$

Geräte: Sieb, 63 $\mu$m; Erlenmeyer-Schliffkolben, 300 ml; Analysenwaage; Membranfilternutsche, 400 ml; Cellulose-Nitrat-Filter, 0,15 $\mu$m (Fa. Sartorius); Trockenschrank; Rückflusskühler; Heizplatte; Destillationseinheit, VAPODEST-5 (Fa. Gerhardt, No. 6550); Messkolben, 250 ml; Flammen-AAS

Chemikalien: 2N $NH_4Cl$-Lösung Neßlers-Reagens (Fa. Merck, Art.Nr. 9028); Borsäure-Lösung, 2 %-ig; Natronlauge, 32 %-ig; 0,1 N Salzsäure; NaCl-Lösung, 0,1 %-ig; KCl-Lösung, 0,1 %-ig.

Durchführung: 5 g Ton werden durch ein 63$\mu$m-Sieb gesiebt und bei 110°C getrocknet. Danach werden genau 2 g auf der Analysenwaage in Differenzwägung in den Erlenmeyer-Schliffkolben eingewogen und mit 100 ml 2N $NH_4Cl$-Lösung versetzt. Die Suspension wird unter Rückfluss eine Stunde lang gekocht. Bei stark $CaCO_3$-haltigen Bentoniten kann es zu einer Ammoniak-Entwicklung kommen. In diesen Fällen muss solange $NH_4Cl$-Lösung zugegeben werden, bis kein Ammoniak-Geruch mehr wahrzunehmen ist. Eine zusätzliche Kontrolle kann mit einem feuchten Indikator-Papier durchgeführt werden. Nach einer Standzeit von ca. 16 h wird der $NH_4^+$-Bentonit über eine Membranfilternutsche abfiltriert und bis zur weitgehenden Ionenfreiheit mit VE-Wasser (ca. 800 ml) gewaschen. Der Nachweis der Ionenfreiheit des Waschwassers wird auf $NH_4^+$-Ionen mit dem dafür empfindlichen Neßlers-Reagens durchgeführt. Die Waschzahl kann je nach Tonart zwischen 30 Minuten und 3 Tagen variieren. Der ausgewaschene $NH_4^+$-Ton wird vom Filter abgenommen, bei 110°C 2h lang getrocknet, gemahlen, gesiebt (63 $\mu$m-Sieb) und nochmals bei 110 °C 2 h lang getrocknet. Danach wird der $NH_4^+$-Gehalt des Tons mittels Elementaranalyse bestimmt.

Berechnung der CEC: Die CEC des Tons wurde in herkömmlicher Weise über den $NH_4^+$-Gehalt des $NH_4^+$-Tons, der über Elementaranalyse des N-Gehalts ermittelt wurde, bestimmt. Hierzu wurde das Gerät Vario EL 3 der Firma Elementar- Heraeus, Hanau, DE, nach den Angaben des Herstellers eingesetzt. Die Angaben erfolgen in mval/100 g Ton (meq/100g).

Beispiel: Stickstoff-Gehalt = 0,93 %;
Molekulargewicht: N = 14,0067 g/mol

$$CEC = \frac{0{,}93 \times 1000}{14{,}0067} = 66{,}4\ \text{mVal/100g}$$

CEC = 66,4 meq/100 g $NH_4^+$-Bentonit

Die Anwesenheit von Stevensit in einen erfindungsgemäß eingesetzten Material oder einer Zusammensetzung kann auf herkömmliche Weise (röntgenographisch) bestimmt werden, wie in Brindley et al. (a.a.O.) und Martin de Vidales et al. (a.a.O.) angegeben.

Die Erfindung wird nun anhand der nachstehenden Beispiele in nicht beschränkender weise erläutert.

Es zeigen:

Fig.1 zeigt eine graphische Darstellung der effektiven Adsorption (%) von erfindungsgemäßen Materialien (Zusammensetzungen) (Sorb1 bis Sorb3) und einem Vergleichsmaterial (V1) für T-2 Toxin.

Fig.2 zeigt eine graphische Darstellung der effektiven Adsorption (%) von erfindungsgemäßen Materialien (Zusammensetzungen) (Sorb1 bis Sorb4) und zwei Vergleichsmaterialien (V1 und V2) für Aflatoxin B1.

Fig.3 zeigt eine graphische Darstellung der effektiven Adsorption (%) von erfindungsgemäßen Materialien (Zusammensetzungen) (Sorb1 bis Sorb4) für Ochratoxin.

Fig.4 zeigt eine graphische Darstellung der effektiven Adsorption (%) von drei erfindungsgemäßen Materialien (Zusammensetzungen) (Sorb1, Sorb2 und Sorb4) für Zearalenon.

**Beispiele**

Die verschiedenen Mykotoxine wurden als kristalline Reinsubstanzen (SIGMA AG) beschafft und in Methanol

aufgenommen (50 $\mu$g/ml). Für die Durchführung der Adsorptionsversuche wurden unter Verwendung von Pufferlösungen (Citratpuffer) Verdünnungen hergestellt, welche je 2000 $\mu$g der verschiedenen Mykotoxine pro Liter enthielten.

Die Adsorptions- und Desorptionseffektivität wurden wie folgt bestimmt:

1. Überprüfung der Adsorptionseffektivität:

A) Adsorption

Zur Durchführung der Adsorptionsversuche wurden wässrige Lösungen mit je 2000 ppb der Toxine hergestellt. Die Lösungen wurden je nach Toxin mittels Citratpuffer auf pH Werte zwischen 3 und 5,5 eingestellt. Für Ochratoxin, Zearalenon, Fumonisin wird die Adsorption bei pH 3 untersucht, weil diese Toxine unter diesen Bedingungen stabil sind. Für Aflatoxin wird bei pH 5,5 gearbeitet, weil bei niedrigeren pH-Werten eine Umlagerung eintritt, die den fluoreszenzspektroskopischen Nachweis stört. Für T-2 Toxin wird die Adsorption bei pH 4,5 untersucht, weil unterhalb dieses pH-Wertes eine Umsetzung zu H-T-2 Toxin eintritt. Diese Verbindung ist ebenso giftig, ist aber nicht mehr gut quantitativ bestimmbar.

In jeweils 25 ml dieser Lösungen wurden 0,1 g der erfindungsgemäßen und nicht-erfindungsgemäßen Zusammensetzung (siehe unten) suspendiert und über 2 Stunden bei einer Temperatur von 37°C gerührt. Hierauf wurden die Suspensionen 5 Minuten bei 2800 Upm zentrifugiert und der klare Überstand mittels HPLC-Analytik auf den Restgehalt an nicht adsorbiertem Mykotoxin untersucht. Die Differenz zwischen der vorgelegten Menge an Toxin und der nach der beschriebenen Adsorptionsphase noch in der Lösung verbliebenen Menge an Toxin entspricht der adsorbierten Menge und wird nachstehend in % der vorgelegten Toxinmenge angegeben. Es werden jeweils die Mittelwerte von Doppelbestimmungen angegeben.

B) Desorption

In einem nachgeschalteten Versuch wird die mögliche Desorption der im ersten Schritt adsorbierten Toxine untersucht. Hierzu wird der nach der Zentrifugation der in A beschriebenen Suspension erhaltene Feststoff in 25 ml destilliertem Wasser bzw. Citratpuffer resuspendiert und auf pH 7 eingestellt. Die nun pH-neutrale Suspension wird wiederum 2 Stunden bei 37°C gerührt und anschließend zentrifugiert. Im klaren Überstand wird die Menge an desorbiertem Toxin mittels HPLC-Analytik bestimmt. Die Menge an in der Lösung gefundenem Toxin wird in Bezug zur ursprünglich im Adsorptionsversuch eingesetzten Toxinmenge gesetzt und nachstehend in % desorbiertes Toxin angegeben. Es sind jeweils die Mittelwerte aus Doppelbestimmungen angegeben.

Die in den Tabellen jeweils angegebenen Werte für die effektive Adsorption entsprechen der Differenz aus % adsorbierte Menge minus % desorbierte Menge. Es sind jeweils die Mittelwerte aus Doppelbestimmungen angegeben.

Die HPLC-Bestimmung erfolgte bei den folgenden Bedingungen:

| | |
|---|---|
| Säule: | Spherisorb ODS-2 125 x 4 mm |
| Aflatoxin: | |
| Derivatisierung: | $F_3CCOOH/CH_3COOH/H_2O$ 2:1:7 |
| Fließmittel: | Wasser/Acetonitril/Methanol 75/15/10 |
| Flussrate: | 1,2 ml/min |
| Detektor: | Fluoreszenz |
| Wellenlänge: | EX 364 nm / EM 440 nm |

Ochratoxin und Zearalenon:

| | |
|---|---|
| Fließmittel: | 570 ml Acetonitril/410 ml Wasser/20 ml Essigsäure |
| Flussrate: | 1,0 ml/min |
| Detektor: | Fluoreszenz |
| Wellenlänge: | EX 274 nm / EM 445 nm |

Quantitative Bestimmung der T-2 Toxin Konzentration mittels HPLC:

Die Überstände aus den Adsorptions- bzw. Desorptionsversuchen werden direkt in die HPLC injiziert. Es wird eine RP 18 Säule mit einem Spheri-5 ODS 2 Kieselgel verwendet (Hersteller Perkin Elmer). Die Teilchengröße beträgt 5 μm, die Säulendimension sind 4,6 x 250 mm. Als mobile Phase wird eine Wasser-Methanol-Acetonitril Mischung im Verhältnis 250:100:100 eingesetzt. Es wird ein Durchfluss von 2 ml/min. eingestellt. Das T-2 Toxin wird UV spektrometrisch bei 200 nm detektiert.

Quantitative Fumonisin-Bestimmung mittels HPLC:

Hier wird dieselbe HPLC Säule eingesetzt, wie sie schon für T-2 Toxin beschrieben wurde. Die wässrige Lösung, die Fumonisin enthält, wird zunächst zur Trocknung eingedampft und mit Naphthalindicarboxyaldehyd derivatisiert (dies ermöglicht eine Fluoreszenzdetektion des Fumonisins über das Derivat), wie es in: Bennet, Journal of the AOAC International, Vol 77, No. 2, 1994, pg 501-506; beschrieben ist. Als mobile Phase wird eine Acetonitril-Wasser-Methanol-Essigsäure Mischung eingesetzt im Verhältnis 45 : 49,3 : 4,8 : 0,9. Es wird eine Flussrate von 2,0 mm/min. eingestellt. Das Fumonisin wird über eine Fluoreszenz bei 500 nm detektiert, wobei bei 420 nm angeregt wird.

Anhand der Ergebnisse wurden die prozentualen Adsorptionsraten berechnet.

Für die Untersuchungen wurden die nachstehenden vier stevensithaltigen Materialien jeweils als vermahlene Rohtone eingesetzt, wobei die mittlere Teilchengröße ($D_{50}$) für Sorb 1, Sorb 2, Sorb 3 bzw. Sorb 4 bei 31 μm, 32 μm, 38 μm bzw. 66 μm lag. Der Nasssiebrückstand auf 45 μm lag jeweils bei kleiner 50 %, der Trockensiebrückstand auf 45 μm bei kleiner 60 %. Stevensit als (Haupt)phase wurde gemäß Brindley et al. (a.a.O.) und Martin de Vidales et al. (a.a.O.) bestätigt. In allen verwendeten Materialien (Sorb 1 bis Sorb 4) war auch ein Anteil an Kerolith nachweisbar. Wie in den beiden vorstehenden Literaturstellen beschrieben, lässt sich Stevensit gegenüber Kerolit und anderen smektitischen Schichtsilikaten u.a. anhand der Pulver-Röntgendiffraktogramme und der Verschiebung der Diffraktionsmuster nach Behandlung mit Ethylenglycol, nach Erhitzen bzw. bei unterschiedlichen Feuchtigkeiten abgrenzen. Zur Charakterisierung der erfindungsgemäßen Materialien kann zudem der Magnesiumoxidgehalt und die CEC herangezogen werden.

Die analytischen Daten zu den verwendeten erfindungsgemäßen Materialien sind in den nachstehenden Tabellen 1 bis 3 zusammengefasst.

### Tabelle 1 Analytische Daten

|  | BET-Oberfläche, $m^2$ / g | Kationenaustauschkapazität (CEC) , meq / 100 g |
|---|---|---|
| **Sorb1** | 224.2 | 20 |
| **Sorb2** | 184.3 | 26 |
| **Sorb3** | 180.1 | 33 |
| **Sorb4** | 125.3 | 20 |

### Tabelle 2 Begleitmineralien

|  | **Begleitminerale (aus der Röntgendiffraktometrie)** |
|---|---|
| Sorb1 | 1-2 % Quarz, 1-2 % Feldspat, 3-4 % Calcit |
| Sorb2 | 1-2 % Quarz, 2 % Feldspat, 1 % Calcit |
| Sorb3 | 1-2 % Quarz, 2 % Feldspat, 6-7 % Calcit, 2 % Dolomite |
| Sorb4 | 2-3 % Quarz, 2-3 % Feldspat, 0.5-1 % Calcit |

### Table 3 Silicatanalyse

|  | **Sorb1** | **Sorb2** | **Sorb3** | **Sorb4** |
|---|---|---|---|---|
| $Al_2O_3$, % | 3.6 | 7.1 | 12.5 | 6.6 |
| $Fe_2O_3$, % | 1.1 | 2.6 | 4.3 | 1.9 |
| CaO, % | 4.8 | 1.7 | 6.4 | 1.1 |
| MgO, % | 25.6 | 22.3 | 10.6 | 26.0 |
| $Na_2O$, % | 0.13 | 0.35 | 0.26 | 0.32 |

(fortgesetzt)

|  | Sorb1 | Sorb2 | Sorb3 | Sorb4 |
|---|---|---|---|---|
| $K_2O$, % | 0.8 | 1.3 | 2.1 | 1.4 |
| $TiO_2$, % | 0.12 | 0.24 | 0.43 | 0.25 |
| $SiO_2$, % | 50.5 | 52.5 | 48.5 | 52.0 |
| Verhältnis $SiO_2$ / MgO | 1.97 | 2.35 | 4.57 | 2.00 |
| Loss on ignition, % | 12.7 | 11.2 | 14.1 | 9.5 |

Beispiel 1:

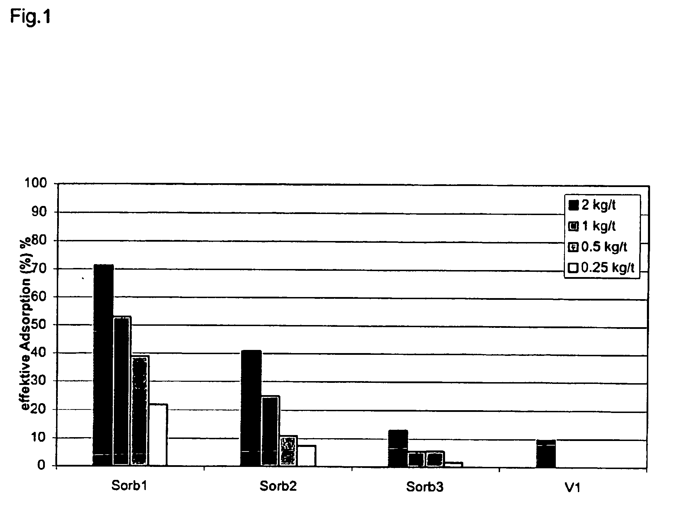

Die Adsorptionseffektivität bei der Mykotoxinbindung für T-2 Toxin (hier 2000 ppb in der Lösung) wurde wie vorstehend angegeben durchgeführt. Die Adsorption wurde bei pH 3, die Desorption bei pH 6 durchgeführt. Als Vergleich wurde eine Mischung aus 85% Ca-Bentonit und 15% SBDMA-Organoton (mit SBDMA organisch modifizierter Bentonit) (V1) eingesetzt. Die erhaltenen Werte (effektive Adsorption in %) sind in der Figur 1 graphisch zusammengefasst. Die Dosierung (Konzentration) der eingesetzten Materialien ist in der Figurenlegende angegeben.

Aus der Figur 1 ist deutlich die hervorragende Adsorptionsleistung der erfindungsgemäßen Materialien Sorb1 bis Sorb3 gegenüber dem kommerziellen Vergleichsmaterial nach dem Stand der Technik ersichtlich, selbst bei niedrigen Dosierungen. Die Materialien Sorb1 und Sorb2 mit einem MgO-Gehalt von über 20 Gew.-% (vgl. Tabelle 1) waren dabei noch deutlich effektiver als Sorb3 mit einem MgO-Gehalt von nur 10,6 Gew.-%.

Beispiel 2:

Die Adsorptionseffektivität bei der Mykotoxinbindung für Aflatoxin B1 wurde wie vor Beispiel 1 angegeben durchgeführt. Exemplarisch wird in diesem Beispiel die Berechnung der effektiven Adsorptionskapazitäten aus den Werten für die Adsorption bei pH 5,5 und die Desorption bei pH 7 aufgeführt. Als Vergleich wurde wiederum eine Mischung aus 85% Ca-Bentonit und 15% SBDMA-Organoton (mit SBDMA organisch modifizierter Bentonit) (V1), sowie ein handelsüblicher Talk (mittlere Teilchengröße 2,5 $\mu$m) (V2) eingesetzt. Die erhaltenen Werte (effektive Adsorption in %) sind in der Figur 2 graphisch zusammengefasst. Die Dosierung (Konzentration) der eingesetzten Materialien ist in der Figurenlegende angegeben.

Aus der Figur 2 ist die hervorragende Adsorptionsleistung der erfindungsgemäßen Materialien Sorb1 bis Sorb4 ersichtlich. Insbesondere bei den niedrigen Dosierungen (z.B. 0,25 kg/t) ist die überlegene Adsorptionsleistung der erfindungsgemäßen Materialien Sorb1, Sorb2 und Sorb4 mit einem MgO-Gehalt von über 20 Gew.-% (vgl. Tabelle 1) gegenüber den Vergleichsmaterialien V1 und V2 deutlich. Sorb 1 zeichnet sich dabei durch einen recht hohen Kerolithanteil von mehr als 40 Gew.-% aus.

Beispiele 3 und 4:

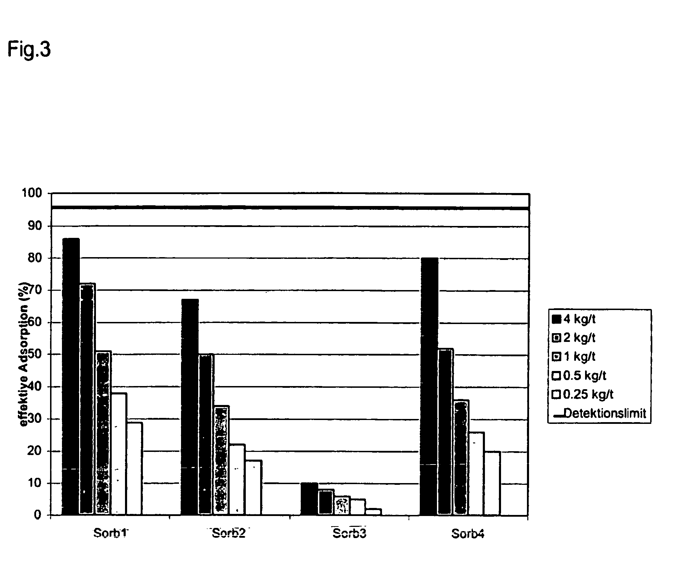

Die Adsorptionseffektivität bei der Mykotoxinbindung für Ochratoxin und Zearalenon wurde wie vor Beispiel 1 angegeben durchgeführt. Exemplarisch wird in diesem Beispiel die Berechnung der effektiven Adsorptionskapazitäten aus den Werten für die Adsorption bei pH 3 und die Desorption bei pH 7 aufgeführt. Die erhaltenen Werte (effektive Adsorption in %) sind in den Figuren 3 (Ochratoxin) bzw. 4 (Zearalenon) graphisch zusammengefasst. Die Dosierung (Konzentration) der eingesetzten Materialien ist in den Figurenlegenden angegeben.

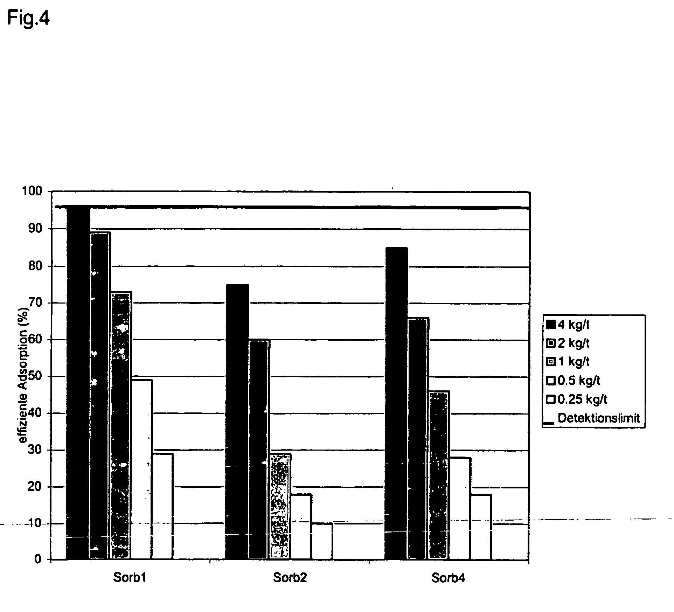

Aus den Figuren 3 und 4 ist die gute Adsorptionsleistung der erfindungsgemäßen Materialien (Zusammensetzungen) für Ochratoxin und Zearalenon ersichtlich. Insbesondere die Adsorptionsleistung der erfindungsgemäßen Materialien Sorb1, Sorb2 und Sorb4 mit einem MgO-Gehalt von über 20 Gew.-% (vgl. Tabelle 1) ist überraschend gut.

In ergänzenden Versuchen wurde auch nachgewiesen, dass die erfindungsgemäßen Materialien (Sorb1 bis Sorb4) sehr gute Adsorptionseffektivitäten bei der Mykotoxinbindung für Fumonisin aufweisen.

**Patentansprüche**

1. Verwendung einer Zusammensetzung enthaltend Stevensit, zur Adsorption von Mykotoxinen.

2. Verwendung gemäß Anspruch 1, **dadurch gekennzeichnet, dass** anstelle oder zusätzlich zu Stevensit mindestens eine stevensithaltige Komponente verwendet wird.

**3.** Verwendung gemäß einem der vorstehenden Ansprüche, **dadurch gekennzeichnet, dass** die Zusammensetzung zu mindestens 10 Gew.-%, vorzugsweise zu mindestens 50 Gew.-%, insbesondere zu mindestens 60 Gew.-%, besonders bevorzugt zu mindestens 80 Gew.-%, aus Stevensit oder einer stevensithaltigen Komponente besteht.

**4.** Verwendung nach einem der vorstehenden Ansprüche, **dadurch gekennzeichnet, dass** mindestens ein Material, insbesondere ein Stevensit oder mindestens eine stevensithaltige Komponente mit einem Magnesiumoxidgehalt von 15 Gew.-%, bevorzugt von mindestens 17 Gew.-%, insbesondere von mindestens 20 Gew.-%, enthalten ist.

**5.** Verwendung nach einem der vorstehenden Ansprüche, **dadurch gekennzeichnet, dass** die Zusammensetzung neben Stevensit bzw. mindestens einer stevensithaltigen Komponente noch Kerolith bzw. mindestens eine kerolithhaltige Komponente enthält.

**6.** Verwendung nach einem der vorstehenden Ansprüche, **dadurch gekennzeichnet, dass** der Stevensit bzw. die mindestens eine stevensithaltige Komponente in nicht säureaktivierter Form eingesetzt wird.

**7.** Verwendung nach einem der vorstehenden Ansprüche, **dadurch gekennzeichnet, dass** mindestens ein Material, insbesondere ein Stevensit oder mindestens eine stevensithaltige Komponente mit einer BET-Oberfläche von mindestens 80 $m^2/g$, vorzugsweise mindestens 100 $m^2/g$, insbesondere mindestens 110 $m^2/g$, enthalten ist.

**8.** Verwendung nach einem der vorstehenden Ansprüche, **dadurch gekennzeichnet, dass** mindestens ein Material, insbesondere ein Stevensit oder mindestens eine stevensithaltige Komponente mit einer Kationenaustauschkapazität (CEC) von < 40 meq/100 g, bevorzugt bei < 35 meq/100 g, insbesondere bei < 30 meq/100 g, enthalten ist.

**9.** Verwendung nach einem der vorstehenden Ansprüche, **dadurch gekennzeichnet, dass** die Kationenaustauschkapazität (CEC) des Materials bei > 5 meq/100 g, vorzugsweise bei > 10 meq/100 g, insbesondere bei > 15 meq/100 g, liegt.

**10.** Verwendung nach einem der vorstehenden Ansprüche, **dadurch gekennzeichnet, dass** die Zusammensetzung im wesentlichen oder vollständig aus Stevensit oder mindestens einer stevensithaltigen Komponente besteht.

**11.** Verwendung nach einem der vorstehenden Ansprüche, **dadurch gekennzeichnet, dass** das Material und/oder die Zusammensetzung keine faserförmigen Schichtsilicate enthält.

**12.** Verwendung nach einem der vorstehenden Ansprüche, **dadurch gekennzeichnet, dass** mindestens ein Material, insbesondere ein Stevensit oder mindestens eine stevensithaltige Komponente mit einem Magnesiumoxidgehalt von < 40 Gew.-%, bevorzugt < 35 Gew.-%, insbesondere < 30 Gew.-%, enthalten ist.

**13.** Verwendung nach einem der vorstehenden Ansprüche, **dadurch gekennzeichnet, dass** in der Zusammensetzung als weitere Komponenten noch mindestens ein weiteres Schichtsilicate enthalten ist.

**14.** Verwendung nach einem der vorstehenden Ansprüche, **dadurch gekennzeichnet, dass** das mindestens eine weitere Schichtsilicat nicht modifizierte, sauer oder alkalisch aktivierte und/oder organisch modifizierte Schichtsilicate umfasst.

**15.** Verwendung nach einem der vorstehenden Ansprüche, **dadurch gekennzeichnet, dass** das mindestens eine weitere Schichtsilicat aus der Gruppe der Smektite, der Attapulgite/Palygorskite, der Vermiculite, Illite, der Serpentine/Kaoline, der Pyrophyllite oder der glimmerartigen Schichtsilicate ausgewählt ist.

**16.** Verwendung nach einem der vorstehenden Ansprüche, **dadurch gekennzeichnet, dass** das mindestens eine weitere Schichtsilicat einen Montmorillonitton, insbesondere einen Bentonit, sowie natürliche Gemische aus Attapulgit sowie Halloysit umfasst.

**17.** Verwendung nach einem der vorstehenden Ansprüche, **dadurch gekennzeichnet, dass** das Material bzw. die mindestens eine stevensithaltige Komponente Stevensit als mineralogische Hauptphase enthält.

**18.** Verwendung nach einem der vorstehenden Ansprüche, **dadurch gekennzeichnet, dass** neben der Zusammensetzung weitere Mykotoxin-Adsorbentien, insbesondere ein nicht mit Säure aktiviertes Schichtsilicat wie ein Calcium- oder Natriumbentonit, und/oder ein organophiles Schichtsilicat, insbesondere ein organophiler Bentonit, und/oder ein mit Säure aktiviertes Schichtsilicat, insbesondere ein säureaktivierter Bentonit, Attapulgit oder Hektorit verwendet werden.

**19.** Verwendung nach einem der vorstehenden Ansprüche, **dadurch gekennzeichnet, dass** die weiteren Mykotoxin-Adsorbentien im Gemisch mit der Zusammensetzung vorliegen.

**20.** Verwendung nach einem der vorstehenden Anspruche, **dadurch gekennzeichnet, dass** die zu adsorbierenden Mykotoxine ein oder mehrere Toxine umfassen, ausgewählt aus der Gruppe der Aflatoxine, Citrinin, Cyclopiazonsäure, Ochratoxin, Patulin, Vertreter der Trichothecene wie Nivalenol, Deoxynivalenol, T-2 Toxin, HT-2 Toxin, Fumonisine, Zearalenon und Ergotalkaloide.

**21.** Verwendung nach einem der vorstehenden Ansprüche, **dadurch gekennzeichnet, dass** die zu adsorbierenden Mykotoxine neben Aflatoxin(en) noch weitere Toxine wie Ochratoxin, Fumonisin, Zearalenon, Deoxynivalenol und/ oder T-2- bzw. T-2-ähnliche Toxine umfassen.

**22.** Verwendung nach einem der vorstehenden Ansprüche, **dadurch gekennzeichnet, dass**, bezogen auf die Menge des zu behandelnden mykotoxinkontaminierten Materials, mindestens 0,01 Gew.-%, vorzugsweise mindestens 0,05 Gew.-%, insbesondere mindestens 0,1 Gew.-%, der Zusammensetzung verwendet werden.

**23.** Mykotoxin-Adsorbens, enthaltend Stevensit bzw. mindestens eine stevensithaltige Komponente und mindestens ein weiteres Mykotoxinadsorbens, ausgewählt aus der Gruppe der Kerolithe bzw. kerolithhaltigen Komponenten, der säure- oder alkaliaktivierten Schichtsilicate, der nicht mit Säure aktivierten Schichtsilicate und/oder organophilen Schichtsilicate.

**24.** Mykotoxin-Adsorbens gemäß Anspruch 23 oder Zusammensetzung wie in einem der Ansprüche 1 bis 22 definiert, weiterhin enthaltend organische, zur Adsorption von Mykotoxinen geeignete Verbindungen wie Ionenaustauscher oder Aktivkohle, sowie ggf. organische Verbindungen, die eine verbesserte Ausnutzung von mykotoxinhaltigen Futtermitteln ermöglichen bzw. die Stoffwechselprozesse im Tier stabilisieren, wie Vitamine, Spurennährstoffe und Probiotika.

**25.** Futterzubereitung, enthaltend ein mykotoxin-kontaminiertes Tierfutter und eine Zusammensetzung enthaltend Stevensit oder mindestens eine stevensithaltige Komponente.

**26.** Verfahren zur Verbesserung der Verwertbarkeit eines Mykotoxin-kontaminierten Futtermittels, **dadurch gekennzeichnet, dass** eine Zusammensetzung wie in einem der vorstehenden Ansprüche definiert oder ein Mykotoxin-Adsorbens gemäß Anspruch 23 oder 24 von, gleichzeitig bzw. zusammen mit, oder nach dem Futtermittel einem Tier verabreicht wird.

**27.** Verfahren gemäß dem vorstehenden Anspruch, **dadurch gekennzeichnet, dass** die Zusammensetzung bzw. das Mykotoxin-Adsorbens vor der Aufnahme durch ein Tier zu dem Futtermittel gegeben oder mit diesem vermischt wird.

**Claims**

**1.** Use of a composition containing stevensite for adsorbing mycotoxins.

**2.** Use according to claim 1, **characterized in that** at least one stevensite-containing component is used instead of or in addition to stevensite.

**3.** Use according to one of the previous claims, **characterized in that** the composition is composed up to at least 10 wt.-%, preferably up to at least 50 wt.-%, in particular up to at least 60 wt.-%, particularly preferably up to at least 80 wt.-%, of stevensite or a stevensite-containing component.

**4.** Use according to one of the previous claims, **characterized in that** at least one material, in particular a stevensite or at least one stevensite-containing component with a magnesium oxide content of 15 wt.-%, preferably of at least 17 wt.-%, in particular of at least 20 wt.-%, is included.

**5.** Use according to one of the previous claims, **characterized in that** the composition also contains, in addition to stevensite or at least one stevensite-containing component, kerolite or at least one kerolite-containing component.

6. Use according to one of the previous claims, **characterized in that** the stevensite or the at least one stevensite-containing component is used in non-acid-activated form.

7. Use according to one of the previous claims, **characterized in that** at least one material, in particular a stevensite or at least one stevensite-containing component with a BET surface area of at least 80 m$^2$/g, preferably at least 100 m$^2$/g, in particular at least 110 m$^2$/g, is included.

8. Use according to one of the previous claims, **characterized in that** at least one material, in particular a stevensite or at least one stevensite-containing component with a cation exchange capacity (CEC) of < 40 meq/100 g, preferably < 35 meq/100 g, in particular < 30 meq/100 g, is included.

9. Use according to one of the previous claims, **characterized in that** the cation exchange capacity (CEC) of the material is > 5 meq/100 g, preferably > 10 meq/100 g, in particular > 15 meq/100 g.

10. Use according to one of the previous claims, **characterized in that** the composition is composed substantially or completely of stevensite or at least one stevensite-containing component.

11. Use according to one of the previous claims, **characterized in that** the material and/or the composition do not contain fibrous sheet silicates.

12. Use according to one of the previous claims, **characterized in that** at least one material, in particular a stevensite or at least one stevensite-containing component with a magnesium oxide content of < 40 wt.-%, preferably < 35 wt.-%, in particular < 30 wt.-%, is included.

13. Use according to one of the previous claims, **characterized in that** at least one further sheet silicate is also included in the composition as further component.

14. Use according to one of the previous claims, **characterized in that** the at least one further sheet silicate comprises non-modified, acid- or alkali-activated and/or organically modified sheet silicates.

15. Use according to one of the previous claims, **characterized in that** the at least one further sheet silicate is selected from the group of the smectites, attapulgites/palygorskites, vermiculites, illites, serpentines/kaolins, pyrophyllites or the micaceous sheet silicates.

16. Use according to one of the previous claims, **characterized in that** the at least one further sheet silicate comprises a montmorillonite clay, in particular a bentonite, as well as natural mixtures of attapulgites as well as halloysite.

17. Use according to one of the previous claims, **characterized in that** the material or the at least one stevensite-containing component contains stevensite as mineralogical main phase.

18. Use according to one of the previous claims, **characterized in that**, in addition to the composition, further mycotoxin adsorbents, in particular a sheet silicate not activated with acid, such as a calcium or sodium bentonite, and/or an organophilic sheet silicate, in particular an organophilic bentonite, and/or a sheet silicate activated with acid, in particular an acid-activated bentonite, attapulgite or hectorite, are used.

19. Use according to one of the previous claims, **characterized in that** the further mycotoxin adsorbents are present mixed with the composition.

20. Use according to one of the previous claims, **characterized in that** the mycotoxins to be adsorbed comprise one or more toxins selected from the group of the aflatoxins, citrinin, cyclopiazonic acid, ochratoxin, patulin, representatives of trichothecenes such as nivalenol, deoxynivalenol, T-2 toxin, HT-2 toxin, fumonisins, zearalenone and ergot alkaloids.

21. Use according to one of the previous claims, **characterized in that** the mycotoxins to be adsorbed also comprise, in addition to aflatoxin(s), further toxins such as ochratoxin, fumonisin, zearalenone, deoxynivalenol and/or T-2 or T-2-like toxins.

**22.** Use according to one of the previous claims, **characterized in that** at least 0.01 wt.-%, preferably at least 0.05 wt.-%, in particular at least 0.1 wt.-% of the composition is used relative to the quantity of the mycotoxin-contaminated material to be treated.

**23.** Mycotoxin adsorbent containing stevensite or at least one stevensite-containing component and at least one further mycotoxin adsorbent, selected from the group of the kerolites or kerolite-containing components, the acid- or alkali-activated sheet silicates, the sheet silicates not activated with acid and/or organophilic sheet silicates.

**24.** Mycotoxin adsorbent according to claim 23 or composition as defined in one of claims 1 to 22, also containing organic compounds such as ion exchangers or activated carbon suitable for the adsorption of mycotoxins, as well as optionally organic compounds which make possible an improved exploitation of mycotoxin-containing feedstuffs or stabilize the metabolic processes in animals, such as vitamins, micronutrients and probiotics.

**25.** Feedstuff preparation containing a mycotoxin-contaminated animal feedstuff and a composition containing stevensite or at least one stevensite-containing component.

**26.** Method for improving the usability of a mycotoxin-contaminated feedstuff, **characterized in that** a composition as defined in one of the previous claims or a mycotoxin adsorbent according to claim 23 or 24 is administered to an animal before, at the same time as or together with, or after the feedstuff.

**27.** Method according to the previous claim, **characterized in that** the composition or the mycotoxin adsorbent is added to the feedstuff or mixed with same before consumption by an animal.

**Revendications**

**1.** Utilisation d'une composition contenant de la stevensite, pour l'adsorption de mycotoxines.

**2.** Utilisation selon la revendication 1, **caractérisée en ce qu'**en remplacement ou en supplément de la stevensite, on utilise au moins un composant contenant de la stevensite.

**3.** Utilisation selon l'une quelconque des revendications précédentes, **caractérisée en ce que** la composition consiste pour au moins 10 % en poids, de préférence pour au moins 50 % en poids, notamment pour au moins 60 % en poids, de façon particulièrement préférée pour au moins 80 % en poids dans de la stevensite ou dans un composant contenant de la stevensite.

**4.** Utilisation selon l'une quelconque des revendications précédentes, **caractérisée en ce qu'**il est contenu au moins une matière, notamment une stevensite ou au moins un composant contenant de la stevensite avec une teneur en oxyde de magnésium de 15 % en poids, de préférence d'au moins 17 % en poids, notamment d'au moins 20 % en poids.

**5.** Utilisation selon l'une quelconque des revendications précédentes, **caractérisée en ce que** la composition contient, hormis de la stevensite voire, au moins un composant contenant de la stevensite, encore de la kérolithe ou un composant contenant de la kérolithe.

**6.** Utilisation selon l'une quelconque des revendications précédentes, **caractérisée en ce que** la stevensite ou le au moins un composant contenant de la stevensite est mis en oeuvre sous une forme non activée par acide.

**7.** Utilisation selon l'une quelconque des revendications précédentes, **caractérisée en ce qu'**il est contenu au moins une matière, notamment une stevensite ou au moins un composant contenant de la stevensite avec une surface en BET d'au moins 80 m$^2$/g, de préférence d'au moins 100 m$^2$/g, notamment d'au moins 110 m$^2$/g.

**8.** Utilisation selon l'une quelconque des revendications précédentes, **caractérisée en ce qu'**il est contenu au moins une matière, notamment une stevensite ou un composant contenant de la stevensite avec une capacité d'échange de cations (CEC) de < 40 meq/100 g, de préférence de < 35 meq/100 g, notamment de < 30 meq/100 g.

**9.** Utilisation selon l'une quelconque des revendications précédentes, **caractérisée en ce** la capacité d'échange de cations (CEC) de la matière se situe à > 5 meq/100 g, de préférence à > 10 meq/100 g, notamment à > 15 meq/100g.

**10.** Utilisation selon l'une quelconque des revendications précédentes, **caractérisée en ce que** la composition consiste sensiblement ou totalement en stevensite ou en au moins un composant contenant de la stevensite.

**11.** Utilisation selon l'une quelconque des revendications précédentes, **caractérisée en ce que** la matière et/ou la composition ne contient aucun silicate feuilleté fibreux.

**12.** Utilisation selon l'une quelconque des revendications précédentes, **caractérisée en ce qu'**il est contenu au moins une matière, notamment une stevensite ou au moins un composant contenant de la stevensite avec une teneur en oxyde de magnésium de < 40 % en poids, de préférence de < 35 % en poids, notamment de < 30 % en poids.

**13.** Utilisation selon l'une quelconque des revendications précédentes, **caractérisée en ce qu'**il est encore contenu dans la composition en tant que composant supplémentaire un silicate feuilleté supplémentaire.

**14.** Utilisation selon l'une quelconque des revendications précédentes, **caractérisée en ce que** l'au moins un silicate feuilleté supplémentaire comprend des silicates feuilletés non modifiés, activés par acide ou par alcali et/ou organiquement modifiés.

**15.** Utilisation selon l'une quelconque des revendications précédentes, **caractérisée en ce que** l'au moins un silicate feuilleté supplémentaire est choisi dans le groupe des smectites, des attapulgites/palygorskites, des vermiculites, des illites, des serpentines/kaolins, des pyrophyllites ou des silicates feuilletés de type mica.

**16.** Utilisation selon l'une quelconque des revendications précédentes, **caractérisée en ce que** l'au moins un silicate feuilleté supplémentaire comprend une montmorillonite, notamment une bentonite, ainsi que des mélanges naturels d'attapulgite ainsi que d'halloysite.

**17.** Utilisation selon l'une quelconque des revendications précédentes, **caractérisée en ce que** la matière ou le composant contenant au moins une stevensite contient de la stevensite en tant que phase principale minéralogique.

**18.** Utilisation selon l'une quelconque des revendications précédentes, **caractérisée en ce que** hormis la composition, on utilise des adsorbants de mycotoxines supplémentaires, notamment un silicate feuilleté non activé par acide, comme une bentonite de calcium ou de sodium et/ou un silicate feuilleté organophile, notamment une bentonite organophile et/ou un silicate feuilleté activé par acide, notamment une bentonite, attapulgite ou hektorite activée par acide.

**19.** Utilisation selon l'une quelconque des revendications précédentes, **caractérisée en ce que** les adsorbants de mycotoxines supplémentaires se présentent en mélange avec la composition.

**20.** Utilisation selon l'une quelconque des revendications précédentes, **caractérisée en ce que** les mycotoxines à adsorber comprennent une ou plusieurs toxines, choisies dans le groupe des aflatoxines, de la citrinine, de l'acide cyclopiazonique, de l'ochratoxine, de la patuline, de représentants des trichothécènes comme le nivalénol, le déeoxynivalénol, la toxine T-2, la toxine HT-2, la fumonisine, la zéaralénone et des alcaloïdes de l'ergot.

**21.** Utilisation selon l'une quelconque des revendications précédentes, **caractérisée en ce que** les mycotoxines à adsorber comprennent, hormis de(s) l'aflatoxine(s) encore des toxines supplémentaires, comme l'ochratoxine, la fumonisine, la zéaralénone, le déeoxynivalénol et/ou la toxine T-2- ou des toxines analogues à la T-2.

**22.** Utilisation selon l'une quelconque des revendications précédentes, **caractérisée en ce qu'**en rapport à la matière à traiter contaminée en mycotoxines, on utilise au moins 0,01 § en poids, de préférence au moins 0,05 % en poids notamment au moins 0,1 % en poids de la composition.

**23.** Adsorbant de mycotoxines, contenant de la stevensite ou au moins un composant contentant de la stevensite et au moins un adsorbant supplémentaire de mycotoxines, choisi dans le groupe des kérolithes ou des composants contenant des kérolithes, des silicates feuilletés activés par acides ou par alcali, des silicates feuilletés non activés par acides et/ou des silicates feuilletés organophiles.

**24.** Adsorbant de mycotoxines selon la revendication 23 ou composition telle que définie dans l'une quelconque des revendications 1 à 22 contenant en outre des composés organiques adaptés pour l'adsorption de mycotoxines, comme des échangeurs d'ions ou du charbon actif, ainsi que le cas échéant des composés organiques, permettant une exploitation améliorée de fourrages contenant des mycotoxines ou stabilisant les processus métaboliques chez l'animal, comme des vitamines, des oligo-éléments et des probiotiques.

**25.** Préparation fourragère contenant un fourrage pour animaux contaminé par mycotoxines et une composition contenant de la stevensite ou au moins un composant contenant de la stevensite.

**26.** Procédé pour l'amélioration de l'exploitabilité d'un fourrage contaminé par mycotoxines, **caractérisé en ce qu'**on administre à un animal une composition telle que définie dans l'une quelconque des revendications précédentes ou un adsorbant de mycotoxines selon la revendication 23 ou 24, simultanément ou ensemble, avec ou après le fourrage.

**27.** Procédé selon la revendication précédente, **caractérisé en ce qu'**on ajoute ou on mélange la composition ou l'adsorbant de mycotoxines avec le fourrage, avant son ingestion par un animal.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0041806 A
- US 5149549 A
- EP 1150767 B1
- EP 1333919 B1
- WO 9113555 A
- EP 1150767 A
- EP 1333919 A
- EP 1333919 A1
- EP 1150767 A1

**In der Beschreibung aufgeführte Nicht-Patentliteratur**

- **A.-J. Ramos ; J. Fink-Gremmels ; E. Hernandez.** Prevention of Toxic Effects of Mycotoxins by Means of Nonnutritive Adsorbent Compounds. *J. of Food Protection,* 1996, vol. 59 (6), 631-641
- **S.L. Lemke ; P.G. Grant ; T.D. Phillips.** Adsorption of Zearalenone by Organophilic Montmorillonite Clay. *J. Agric. Food Chem.,* 1998, 3789-3796
- **J.L. Martin de Vidales et al.** *Clay Minerals,* 1991, vol. 26, 329-342
- **Brindley et al.** *Mineralogical Magazine,* 1977, vol. 41, 443-452
- **Bennet.** *Journal of the AOAC International,* 1994, vol. 77 (2), 501-506